**Europäisches Patentamt**

**European Patent Office**

**Office européen des brevets**

(11) Veröffentlichungsnummer: **0 065 646**
**A1**

(12) ## EUROPÄISCHE PATENTANMELDUNG

(21) Anmeldenummer: 82103364.4

(22) Anmeldetag: 21.04.82

(51) Int. Cl.³: **F 16 J 15/34**
**F 16 J 15/36**

(30) Priorität: 21.05.81 DE 3120185
07.04.82 DE 3212939

(43) Veröffentlichungstag der Anmeldung:
01.12.82 Patentblatt 82/48

(84) Benannte Vertragsstaaten:
AT BE CH FR GB IT LI LU NL SE

(71) Anmelder: Kupka, Dieter
Binger Landstrasse 37a Postfach 59
D-6570 Kirn/Nahe(DE)

(72) Erfinder: Kupka, Dieter
Binger Landstrasse 37a Postfach 59
D-6570 Kirn/Nahe(DE)

(74) Vertreter: Bunke, Max, Dipl.-Ing.
Patentanwälte Prinz, Bunke & Partner Lessingstrasse 9
D-7000 Stuttgart 1(DE)

(54) **Axiale Gleitringdichtung.**

(57) Einer der beiden Ringe eines Ringpaares, entweder der nicht umlaufende Grundring (45) oder der umlaufende Gleitring (7), ist unter von einem gasförmigen oder flüssigen Medium abgeleiteter Kraft axial verschiebbar ausgebildet. Der axial verschiebbare Grundring (45) ist dann selbst als in einem Dichtungsgehäuse axial verschiebbarer Kolben (8) ausgebildet, während der Gleitring (7) mittels eines nicht mitumlaufenden Kolbens (83) axial verschiebbar ist, wobei zwischen Kolben (83) und Ring (7) ein Lager (71) angeordnet ist. Die Kolben (8-83) ihrerseits stehen zweckmäßig unter der Wirkung von Bläh-(1) oder Dehnkörpern (11-20). Die Erfindung ist besonders für die Abdichtung von Rührwerks- und von Pumpenwellen anwendbar.

Fig. 1

Fig. 17

EP 0 065 646 A1

## Axiale Gleitringdichtung

Die Erfindung betrifft axiale Gleitringdichtungen, insbesondere für gegen hohe Betriebsdrücke zu dichtende Wellen, mit Ringpaaren, deren jeweils einer Ring mit der Welle mitläuft und mit seiner einen Stirnfläche an der Stirnfläche eines jeweils anderen, nicht umlaufenden Ringes gleitet. Solche Gleitringdichtungen werden immer dann verwendet, wenn Stopfbuchsdichtungen nicht ausreichen. Stopfbuchsen werden im allgemeinen nur für Betriebsdrücke bis 6 bar verwendet. Vollständig dicht sind sie nur zwischen ruhenden Teilen, während bei umlaufenden Wellen sich in der Dichtung Durchgangskanäle ausbilden, so daß Stopfbuchsen

auch dann nicht geeignet sind, wenn eine sichere Dichtung gegenüber Gasen und Dämpfen erreicht werden soll, wie sie insbesondere bei Rührwerkswellen notwendig ist, wenn die Rührwerke auf Hochdruckkessel aufgesetzt sind, in denen der Raum über dem Rührgut von aggressiven oder giftigen oder sonst schädlichen Gasen oder Dämpfen erfüllt ist, die auch nicht spurenweise nach außen entweichen dürfen. Um eine genügende Dichtung im Gasraum zu erreichen, werden bei hohen Drücken im allgemeinen doppelt wirkende Gleitringdichtungen verwendet, die entsprechend komplizierter und teurer sind als einfach wirkende, größere Bauhöhe haben als jene und mit einem Sperrmedium gefahren werden müssen, dessen Lieferung und Druckregelung wieder besondere Vorkehrungen erfordert. Gleitringdichtungen werden weiter zur Abdichtung der Wellen von Pumpen für aggressive Medien verwendet; im Gegensatz zu den Rührwerkswellen, die im allgemeinen senkrecht angeordnet sind, sind die Pumpenwellen im allgemeinen waagerecht angeordnet. Während, wie gesagt, die Gleitringdichtungen von Rührwerkswellen im Gasraum wirken, werden die Dichtungen der Pumpenwellen geflutet gefahren. Während die Drehzahlen von Rührwellen im allgemeinen unter etwa 1500 Upm liegen, können die Pumpenwellen mit erheblich höheren Drehzahlen rotieren.

Der Erfindung liegt die Aufgabe zugrunde, eine Gleitringdichtung zu schaffen, die für die Abdichtung sowohl von Rührwerkswellen wie von Pumpenwellen auch gegen höchste Drücke geeignet ist, in der Regel aber schon bei nur einfacher bzw. einfach wirkender Anordnung, also unter Verzicht auf doppelt wirkende Anordnungen, die aber in Sonderfällen mit den gemäß der Erfindung ausgebildeten Gleitringdichtungen auch ohne Schwierigkeiten zu verwirklichen sein sollen. Mit der Verwendbarkeit der einfach wirkenden Dichtungen soll auch die Notwendigkeit der Benutzung und Steuerung besonderer Sperrmedien entbehrlich gemacht werden. Der Raumbedarf in axialer Richtung soll vermindert werden.

Die Lösung dieser Aufgabe besteht gemäß der Erfindung darin, daß einer der beiden Ringe eines Ringpaares unter von einem gasförmigen oder flüssigen Druckmittel abgeleiteter Kraft axial verschiebbar ausgebildet ist. Der Laufdruck wird also durch die von dem gasförmigen oder flüssigen Druckmittel gelieferte Verschiebungskraft erzeugt.

Eine erste Gruppe von Ausführungsformen ergibt sich, wenn der nicht umlaufende Ring (Grundring) eines Ringpaares axial verschiebbar gemacht wird, eine zweite Gruppe, wenn der umlaufende Gleitring axial verschiebbar ausgebildet wird.

Im ersten Fall liegt eine Weiterbildung der Erfindung darin, daß der nicht umlaufende Ring eines Ringpaares als unter der Wirkung eines gasförmigen oder flüssigen Druckmittels in einem Dichtungsgehäuse axial verschiebbarer Kolben ausgebildet ist, im zweiten Fall darin, daß der umlaufende Gleitring eines Ringpaares mittels einer unter der Wirkung eines gasförmigen oder flüssigen Druckmittels axial verschieblichen, nicht mitumlaufenden Kolbens axial verschiebbar ausgebildet ist.

Ausführungsformen der ersten Gruppe haben den Vorteil, daß die Abdichtung des Kolbengrundringes wegen seiner nur axialen und sich nur über einen kleinen Weg erstreckenden Bewegung gegenüber den ihn führenden Gehäusewandungen keine Schwierigkeiten macht, weil keine relative Drehung auftritt. Die Bauhöhe wird wesentlich kleiner als bei den bisher bekannten Dichtungen und ein großer Teil des teuren, hochwertigen Sondermaterials wie Nickel, Molybdän und Titan, das bei den bisher bekannten Gleitringdichtungen aufgewendet werden mußte, kann eingespart werden.

Ausführungsformen der zweiten Gruppe ermöglichen es, unter Beibehaltung der Erzeugung des dichtenden Laufdruckes durch Kolbenwirkung und damit der wesentlichen Vorteile der ersten Gruppe von Ausführungsformen auf dem Markt befindliche, zum Teil bereits genormte Gleitringdichtungsbestandteile, besonders hinsichtlich des nicht mitumlaufenden Grundringes, zu verwenden.

Da bei der ersten Gruppe von Ausführungsformen auf die eine Seite des Grundringkolbens der Betriebsdruck einwirkt, ist auf der anderen Seite des Kolbens eine Druckkammer gebildet, von der aus die Wirkung des Betriebsdruckes ausgeglichen und eine gewünschte, einem Differenzdruck oder einer anderweit gelieferten Zusatzdruckkraft entsprechende Andruckkraft des Kolbens auf der Lauffläche des Gleitringes erzeugt werden kann. Die Andruckkraft kann somit ohne besonderen Aufwand auch bei höchsten Behälter- bzw. Betriebsdrücken klein gehalten werden, so daß die entsprechend kleine Gleitreibung auch nur geringen Verschleiß erzeugt. Der axial bewegliche Kolben kann gegenüber den ihn führenden Wänden des Dichtungsgehäuses mittels in seinen Mantel eingesetzter Kolbenringe abgedichtet sein. Eine besondere Weiterbildung der Erfindung liegt jedoch darin, daß der im Dichtungsgehäuse geführte Kolben auf seiner dem Behälter- oder Betriebsdruck abgewendeten Seite unter der Wirkung eines zur Aufnahme des Druckes flüssiger oder gasförmiger Medien geeigneten, elastisch dehnbaren Blähkörpers steht, dessen Innenraum den Druckraum der Druckkammer bildet. Ein solcher Blähkörper läßt nicht nur eine feinfühlige Einstellung und Beeinflussung des auf die dem Betriebsdruck abgewendete Kolbenseite einwirkenden Druckes und damit der auf der Kolbenrückseite erzeugten Druckgegenkraft zu, sondern er dichtet auch alle ihn umgebenden Flächen gegenüber den unter Betriebsdruck stehenden und sonstige Medien. Für die gleiche Wirkung bei bekannten Bauarten notwendige besondere Abdichtungen in Verbindung mit Drehteilen, Federn und dgl. werden dabei entbehrlich. Durch Einspannung eines vorgespannten Blähkörpers läßt sich auch die Wirkung einer Zug- oder Druckfeder zur Erzeugung eines gewünschten Laufdruckes erzielen.

Eine Weiterbildung der Erfindung liegt auch darin, daß neben der Druckkammer auf der dem Betriebsdruck abgewendeten Seite des Kolbens eine von der Druckkammer durch eine Abstandshülse getrennte Schmierkammer gebildet ist.

Der Blähkörper kann ein elastisch dehnbarer Ring von im wesentlichen U-förmigem Querschnitt sein, dessen Innenraum den Druckraum der Druckkammer bildet und dessen Schenkel Klemmleisten aufweisen. Es lassen sich aber auch viele andere, Hohlräume begrenzende Querschnittsformen für die Blähkörperringe verwenden; der Blähkörper kann auch ein durch eine Druckluftfüllung vorgespannter, geschlossener Schlauchring sein.

Statt in die Druckammer einen Blähkörperring einzulegen, kann man in Weiterbildung der Erfindung die Druckkammer auch durch zwei getrennte, in ihrer Höhe streckbare, konzentrische Ringe begrenzen, deren Streckbarkeit durch eine Wellung erzeugt sein kann.. Die Ringe können dann auch aus Metall bestehen.

Wie später gezeigt, eignen sich die erfindungsgemäß ausgebildeten Dichtungen auch für Doppelanordnungen, und zwar sowohl für eine Ineinanderschachtelung, als auch für die in axialer Richtung doppelt wirkende Anordnung. Bei solchen für besondere Sicherheitsverhältnisse in Betracht kommenden doppelt wirkenden Anordnungen bleibt auch bei Verdoppelung der Einbauteile der Vorteil geringerer Bauhöhe gegenüber bisher bekannten doppelt wirkenden Gleitringdichtungen erhalten.

Besonders bei der Verwendung der erfindungsgemäßen Dichtungen zur Abdichtung der Wellen von Pumpen für hohe Drücke und mit großen Drehgeschwindigkeiten ist es zweckmäßig, eine Zwangsschmierung der Lauffläche des Gleitringes vorzusehen. In Weiterbildung der Erfindung ist hierzu die Druckkammer, vorzugsweise der Hohlraum eines in die Druckkammer eingesetzten Blähkörpers als Pufferraum für den Durchgang des Schmiermittels benutzt und durch Kanäle mit einer in der Lauffläche mündenden Einspritzdüse verbunden, wobei die Druckkammer bzw. der Hohlraum des Blähkörpers an Vorrats- und druckerhaltende Systeme für das Schmiermittel angeschlossen ist..

In der oben erwähnten Bauart mit axial verschiebbarem, umlaufendem Gleitring ist die Erkenntnis verkörpert, daß der Kolben auch dann nur axial verschieblich und nicht mitumlaufend ausgebildet zu werden braucht, wenn er zur axialen Verschiebung eines umlaufenden Gleitringes und zur Lieferung des dichtenden Laufdruckes für diesen benutzt wird. Zweckmäßig ist der Kolben als koaxial mit dem umlaufenden Gleitring angeordneter Ringkolben ausgebildet.

Daß der die Axialbewegung oder den Laufdruck des umlaufenden Gleitringes liefernde Ringkolben nicht mit umzulaufen braucht, wird dadurch erreicht, daß zwischen den Ringkol-

]ben und den umlaufenden Gleitring ein Lager, das in Weiterbildung der Erfindung ein Lager für die Welle ist, und zwar vorzugsweise ein radial und axial belastbares Wälzlager, eingebaut ist. Von besonderem Vorteil ist es, dieses Lager dem umlaufenden Gleitring unmittelbar benachbart anzuordnen. Hierdurch werden nämlich den miteinander zusammenwirkenden Laufflächen des umlaufenden Gleitringes einerseits und des ortsfesten Grundringes andererseits von der Welle sonst ausgehende, in Querrichtung wirkende Vibrationen ferngehalten, so daß die Abnutzung der Laufflächen verringert, die Lebensdauer der Ringe also erhöht wird.

Die Axialverschiebung des umlaufenden Gleitringes ist hinsichtlich der Abdichtbarkeit dadurch problemlos gemacht, daß nicht der Ring selbst unmittelbar axial verschoben wird, sondern daß er mit einer Wellenschonhülse, die ihrerseits axial verschieblich auf der Welle gelagert ist und auf der auch der innere Ring des erwähnten, dem umlaufenden Gleitring benachbarten Lager sitzt, zu einer Einheit verbunden ist, auf welche die Axialbewegung des Kolbens übertragen wird. Der umlaufende Gleitring und der innere Ring des Wälzlagers sind auf einer auf der Rührwerkswelle drehfest, aber axial verschieblich gelagerten Schonhülse mitumlaufend angeordnet und der äußere Lagerring des Wälzlagers sitzt in einem zylindrischen, hülsenförmigen Ansatz des Ringkolbens. Die Verschiebebewegung und der Laufdruck werden also über das Lager übertragen, das insoweit auch axial belastbar sein muß.

Zweckmäßig ist das Lager innerhalb eines über den umlaufenden Gleitring geleiteten drucklosen Schmiermittelkreislaufes angeordnet, wobei das Schmiermittel zugleich Kühlmittel ist. Die Flächen, mit denen der Gleitring und der Grundring aufeinander gleiten, werden dagegen von einer Druckschmierleitung her über mindestens eine im Grundring angeordnete Schmierbohrung geschmiert, welche in eine oder mehrere ringförmige Schmiernuten führt.
Weitere Einzelheiten ergeben sich aus der folgenden Zeichnungsbeschreibung.

Die Zeichnung zeigt Ausführungs- und Anwendungsbeispiele von erfindungsgemäß ausgebildeten Gleitringdichtungen.

Fig. 1 ist ein Schnitt durch eine einfach wirkende Gleitringdichtung für im wesentlichen senkrechte Rührwerkswellen, bei der ein axial verschiebbarer Grundring-Kolben von oben her gegen den mit der Welle umlaufenden Gleitring anliegt, links mit, rechts ohne Lecktasse;

Fig. 2 bis 4 und 10 zeigen Querschnittsformen von in den erfindungsgemäßen Gleitringdichtungen verwendbaren Blähkörperringen;

Fig. 5 ist ein Fig. 1 entsprechender Schnitt durch eine hinsichtlich des verwendeten Blähkörperringes sowie dadurch abgewandelte Ausführungsform, daß hier der axial verschiebbare Grundring-Kolben von unten her am mitumlaufenden Gleitring anliegt, wieder links mit und rechts ohne Lecktasse.

Fig. 6 ist ein Schnitt durch eine Ausführung, bei der der Blähkörper durch zwei in einem Abstand voneinander angeordnete, konzentrische, eine Druckkammer einschließende Wellringe ersetzt ist, im übrigen links mit Lecktasse und von oben auf den Gleitring drückendem Grundring-Kolben, rechts ohne Lecktasse und mit von unten unter Entlastung gegen den umlaufenden Gleitring drückenden Grundring-Kolben.

Fig. 7 ist ein Schnitt durch eine unter Verwendung von Elementen der Bauart nach Fig. 6 verwirklichte doppelt wirkende Anordnung;

Fig. 8 ist ein Schnitt durch eine Ausbildung ohne Blähkörper und ohne sonstige elastische Begrenzung einer im Dichtungsgehäuse über dem in diesem dicht geführten Grundring-Kolben gebildeten Druckkammer, links mit Lecktasse und von oben auf den umlaufenden Gleitring einwirkendem Grundring-Kolben und rechts ohne Lecktasse, mit von unten gegen den Gleitring anliegendem Kolben, mit Entlastung.

Fig.9 zeigt im Schnitt die Verwendung einer eingespannten Membran als Druckkammerbegrenzung, links mit Einwirkung der Membran auf den Kolben über einen in diesen eingelegten Dichtungsring und von oben auf den Gleitwirkenden Kolben, rechts mit auf dem Kolben dicht aufgeschraubter Membran und Einwirkung des Kolbens auf den Gleitring von unten.

Fig.11 zeigt im Schnitt die Verwendung ineinander geschachtelter erfindungsgemäß ausgebildeter Gleitringdichtungen für ein Rührwerk mit einer inneren und einer sie umgebenden, gegenläufig rotierenden äußeren Rührwelle.

Fig.12 zeigt im Schnitt die Verwendung einer erfindungsgemäß ausgebildeten Gleitringdichtung an einer horizontalen Pumpenwelle.

Fig.13 erläutert im Schnitt die Anbringung einer Zwangsschmierung für die Gleitfläche an einer erfindungsgemäß ausgebildeten Gleitringdichtung,

Fig.14 zeigt eine Abwandlung der Zwangsschmierung nach Fig.13,

Fig.15 ist ein Ausschnitt aus Fig.13 in größerem Maßstabe und

Fig.16 ein Ausschnitt aus Fig. 14 in größerem Maßstabe.

Fig.17 zeigt einen Schnitt durch die linke Hälfte einer Ausführungsform, bei der der umlaufende Gleitring axial verschieblich ist.

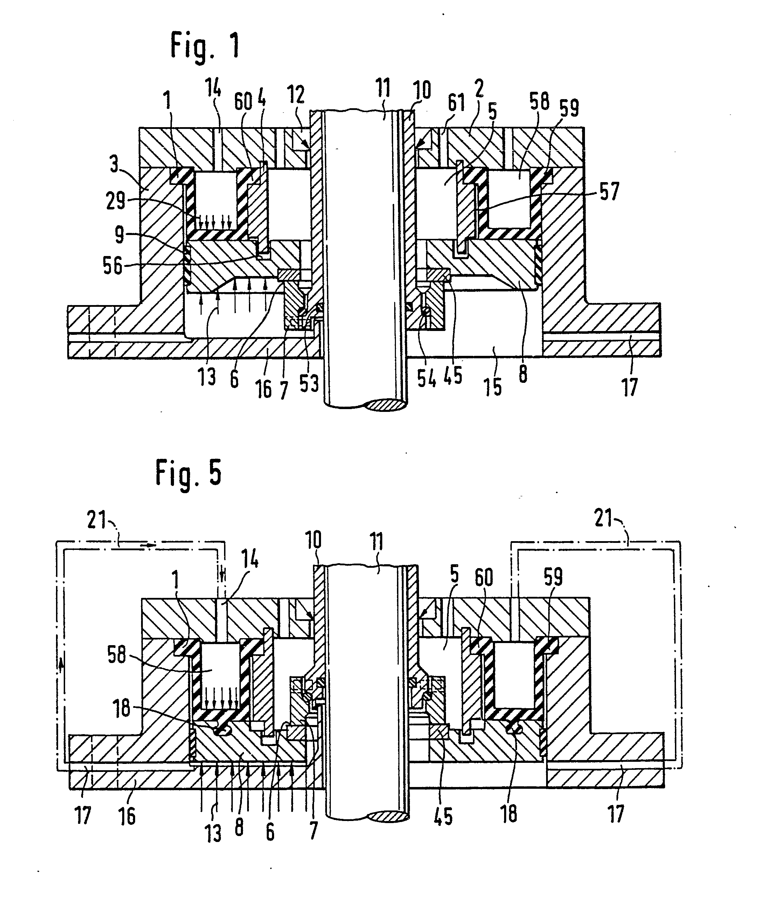

Bei der Gleitringdichtung nach Fig. 1 ist in einem Dichtungsgehäuse 3, das durch einen Gehäusedeckel 2 verschlossen ist, ein nicht drehbarer Grundring-Kolben 8 axial beweglich geführt. Durch das Dichtungsgehäuse ist eine Rührwerkswelle 11 hindurchgeführt, die im Dichtungsbereich von einer Schonhülse 10 umgeben ist. Die Schonhülse 10 ist mit der Rührwelle 11 in nicht gezeichneter Weise drehfest verbunden. Durch einen in ihr unteres Ende eingesetzten Dichtungsring 53 ist ihr gegenüber der Welle etwa vorhandenes Spiel gegen den Durchtritt von Dämpfen oder Gasen abgedichtet. Auf dem unteren Ende der Schonhülse 10 ist der mit der Rührwelle 11 umlaufende Gleitring 7 befestigt, z. B. angeschraubt. Er kann auf einen Endflansch der Hülse aufgelegt sein. In jedem Falle ist er gegenüber der Schonhülse 10 gegen den Durchtritt von Gasen oder Dämpfen durch einen Dichtungsring 54 abgedichtet. Die obere Stirnfläche des Gleitringes 7 bildet die Lauffläche 6, auf der der axial bewegliche Grundring-Kolben 8 mit einem in ihn eingesetzten Ring 45 aus Gleitwerkstoff aufliegt. Wenn das die Rührwelle enthaltende Rührwerk auf einen das zu rührenden Gut enthaltenden Behälter aufgeflanscht ist, herrscht innerhalb des Raumes 15 im Dichtungsgehäuse 3 unterhalb des Grundring-Kolbens 8 der gegebenenfalls hohe, im Behälter aufrechterhaltene Betriebsdruck, der in Fig. 1 in Richtung der Pfeile 13 von unten gegen den Grundring-Kolben wirkt. Nach unten ist bei der Bauart nach Fig. 1 links das Dichtungsgehäuse 3 durch eine Lecktasse 16 abgeschlossen, aus der eine Leckageleitung 17 herausführt. Bei der Bauart nach Fig. 1 rechts ist die Lecktasse weggelassen, die Leckageleitung 17 aber beibehalten.

Der Raum oberhalb des Grundring-Kolbens 8 ist durch eine in den Deckel 2 konzentrisch zur Rührwelle 11 eingesetzte Abstandshülse 4 in zwei Ringkammern geteilt. Die innere Ringkammer 5 ist eine Schmierkammer, in welche drucklos ein Schmiermittel, z. B. Mineralöl, Glyzerin, Glykol oder Wasser eingeführt wird. Dieses Schmiermittel schmiert die Lauffläche 6. Durchtropfendes Schmiermittel wird durch die Leckageleitung 17 abgeführt.

Die Abstandshülse 4 ist in dem Gehäusedeckel 2 z. B. eingeschrumpft oder an ihn angeschweißt. An ihrem anderen Ende ist sie mit einem abgesetzten Hals in eine in der dem Betriebsdruck abgewendeten Fläche des Kolbens 8 angebrachte Nut 56 verschieblich unter Freilassung eines einer Axialbewegung des Kolbens 8 zulassenden Axialspieles eingesetzt. Die auf der der Schmierkammer 5 abgewendeten Seite der Abstandshülse 4 oberhalb des Kolbens 8 gebildete Kammer ist als Druckkammer 57 verwendet. Bei dem Beispiel nach Fig. 1 ist in die Druckkammer 57 ein elastisch dehnbarer Blähkör-

per 1 eingesetzt, dessen Schenkel Klemmleisten 59, 60 aufweisen, mit denen er zwischen Schultern des Gehäuses 3 und der Abstandshülse 4 einerseits und dem Gehäusedeckel 2 andererseits dicht eingespannt ist. Der Blähkörperring ist so bemessen, daß er an der Innenwand des Gehäuses 3, der Außenwand der Hülse 4 und der Oberfläche des Kolbens 8 anliegt. Der von ihm umschlossene Hohlraum 58 bildet den eigentlichen Druckraum der Druckkammer 57; er steht mit einer im Deckel 2 angebrachten Druckmittelzuleitung 14 in Verbindung. Der Schmiermittelzuleitung zu der Schmierkammer 5 dienen weitere den Deckel 2 durchquerende Kanäle 61.

Wegen seiner Anlage an den Wänden der Druckkammer 57 kann sich der Blähkörperring 1 nur in Richtung der Pfeile 29 dehnen. Sein Innenraum 58 wird über die Zuleitungen 14 unter einen um 1,5 bis 2 Bar höheren Druck gesetzt, als der Betriebsdruck beträgt, so daß der Auflagedruck des Kolbens 8 mit dem in ihn eingelegten Ring 45 auf der Lauffläche 6 des Gleitringes 7 auf eine beliebig wählbare kleine Differenz zwischen den vom Betriebsdruck einerseits und dem Druck des Mediums in dem Hohlraum 58 andererseits erzeugten Kräften beschränkt wird.

Da der Druck im Innenraum 58 des Blähkörperringes 1 auf diesen gleichförmig nach allen Seiten wirkt, werden alle ihn umgebenden Flächen gegen unter dem Betriebsdruck stehende Medien abgedichtet. Zusätzlich können in einer Nut 9 im Umfang des Kolbens 8 noch aus Gleitwerkstoffen bestehende Elemente, z. B. eine PTFE-Hülse, Lippenringe oder O-Ringe vorgesehen werden, die zusätzlich dichtend wirken.

Die Schmierkammer 5 ist durch einen in einer Ausnehmung des Deckels 2 auf die Schonhülse 10 aufgesetzten Lippenring 12, der z. B. aus synthetischem Nitrilkautschuk besteht, nach außen abgedichtet.

Eine vereinfachte Abwandlung der Bauart nach Fig. 1 ergibt

sich, wenn die Schonhülse 10 weggelassen wird. Der zuletzt erwähnt Lippenring 12 wird dann unmittelbar auf die Rührwelle 11 aufgesetzt und auch der mitumlaufende Gleitring 7 wird dann unmittelbar auf der Welle 11 angebracht.

Der elastische Blähkörperring 1 kann aus PTFE oder irgendeinem geeigneten Elastomer hergestellt sein.

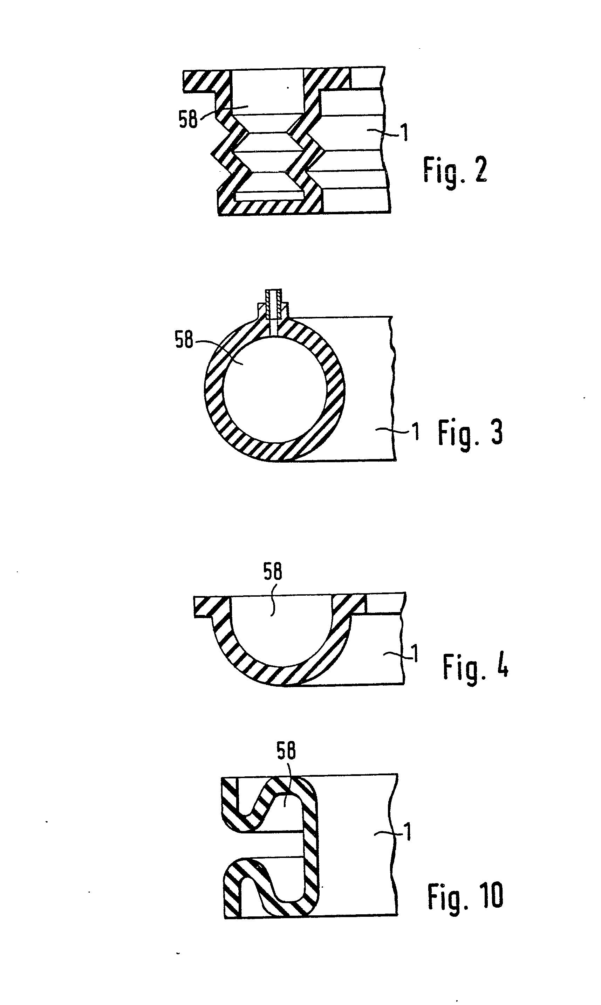

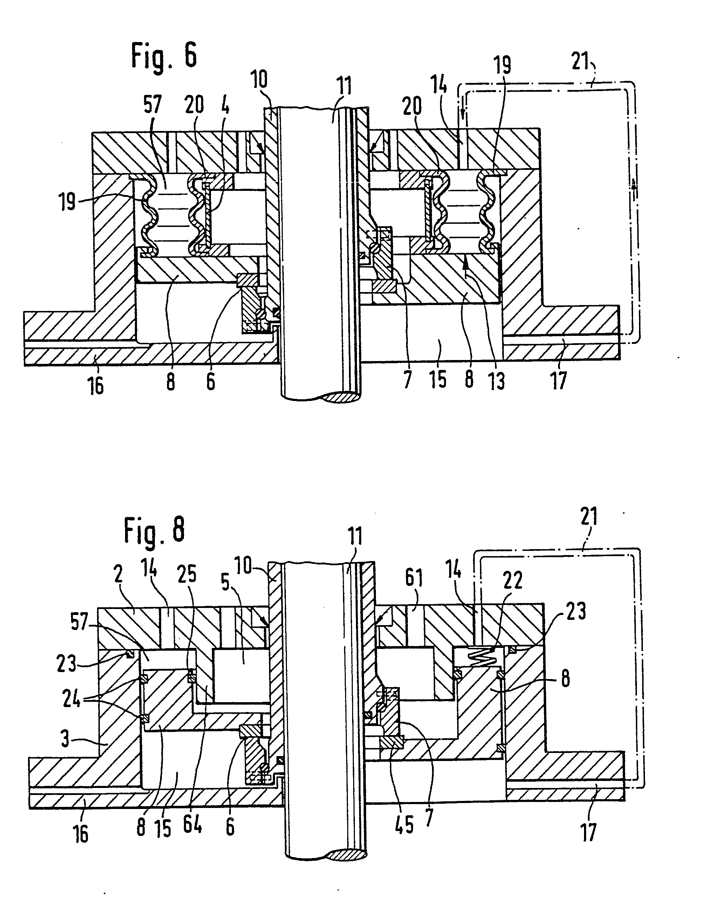

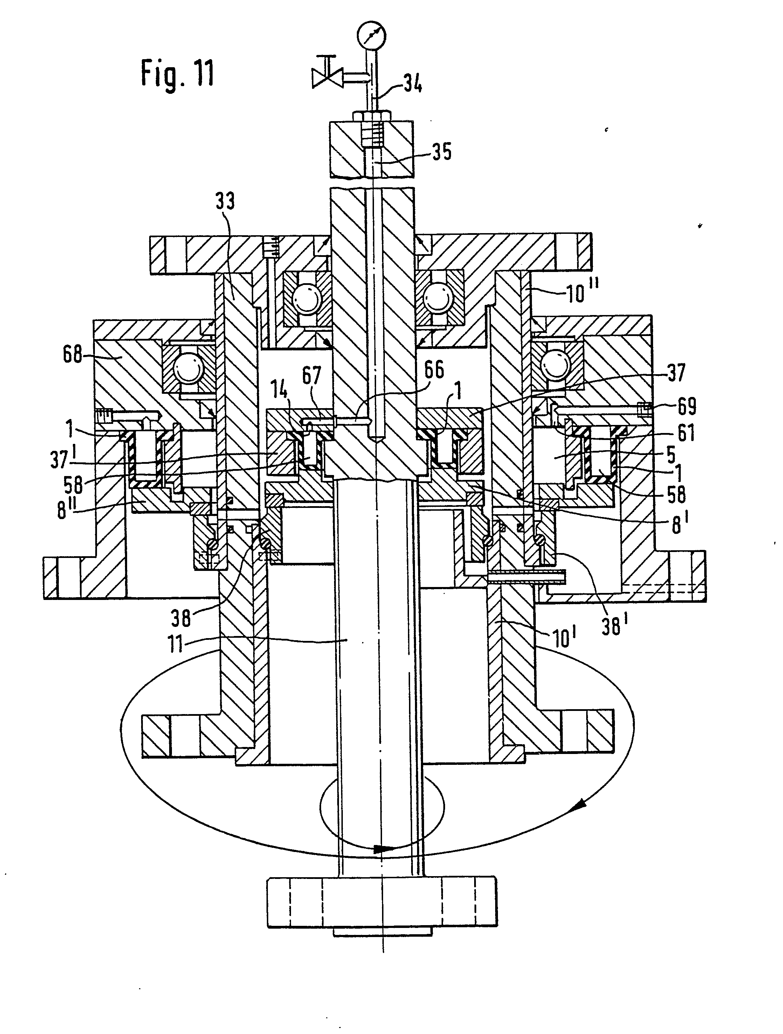

Statt eines Blähkörperringes von im wesentlichen U-förmigem Querschnitt lassen sich auch Ringe mit Querschnittsformen verwenden, wie sie in Fig. 2 bis 4 und in Fig. 10 dargestellt sind. Bei der Ausführung nach Fig. 2 sind die U-Schenkel Faltenbälge; gemäß Fig. 4 ist der Ringquerschnitt halbkreisförmig und gemäß Fig. 10 ist ein Wulstring vorgesehen. In jedem Fall stellt der von den Ringen umschlossene Innenraum 58 eine Dehnkammer dar. Eine Besonderheit ergibt sich, wenn, wie in Fig. 3 dargestellt, der Blähkörper-Ring einen auffüllbaren und verschließbaren Schlauch darstellt. Die Dehnkammern können mit Flüssigkeiten, wie Hydroöl, Wasser, Glyzerin oder dergl.,aber auch mit Druckgas, wie Preßluft, beschickt werden. Dabei können die Dehn- oder Druckkammern an vorrats- und druckerhaltende Systeme angeschlossen sein. Wenn der Blähkörper-Ring einen verschließbaren Schlauch wie nach Fig. 3 darstellt, läßt sich dieser vor In-Betriebnahme der Dichtung mit Preßgas aufblasen und hermetisch verschließen, wonach er nahezu unbegrenzt lange seine ihm einmal verliehene, federnde Druckwirkung ausübt, ganz im Gegensatz zu den bei üblichen doppelt wirkenden Gleitringdichtungen sonst verwendeten Sperrdruck-Systemen.

Bei der Ausführung nach Fig. 5 ist der Gleitring 7 gegenüber der Anordnung nach Fig. 1 spiegelbildlich auf der Schonhülse 10 angebracht, nämlich so, daß seine Lauffläche 6 unten liegt; der Kolben 8 liegt also von unten her mit seinem Einsatzring 45 an dem Gleitring 7 an. Die Lauffläche ist hier dadurch entlastet, daß der Behälterdruck über an die Leckageleitungen 17 anschließende Rohrverbindungen 21 in die Dehnkammer 58 des Blähkörper-Ringes 1 eingeleitet ist. Hier ist der Blähkörper-Ring 1 durch Vorspannung mittels eines in den Kolben 8 eingreifenden Verankerungswulstes 18 für die Ausübung einer federnden Zugkraft eingerichtet, die bei dem Beispiel nach Fig. 5 nach oben wirkt, also die Auflagekraft auf der Lauffläche 6 liefert. Die rechte Hälfte der Fig. 5 zeigt gegenüber der linken eine Abwandlung insofern, als rechts die Lecktasse 16 weggelassen ist. Die Erzeugung des Laufdruckes auf der Lauffläche 6 durch die von dem eingespannten Blähkörper ausgeübte federnde Zugkraft ergibt eine besondere Schonung der Lauffläche.

Bei dem Beispiel nach Fig. 6 ist der Blähkörper-Ring 1 der Bauart nach Fig. 1 und Fig. 5 durch in der Druckkammer 57 in einem Abstand voneinander angeordnete metallische Wellen-Ringe 19, 10 ersetzt, die durch ihre Wellung in ihrer Höhe elastisch dehnbar gemacht sind. Die Wellringe 19 und 20 sind an ihren oberen und unteren Enden zwischen Teilen des Gehäuses und die Abstandshülse 4 bildenden Elementen sowie dem Kolben 8 dicht eingespannt. Der Ring 19 liegt mit seiner Wellung an der Innenwand des Dichtungsgehäuses 3 und der Wellring 20 liegt mit seiner Wellung an der Außenwand der Abstandshülse 4 an. Die Ausführung nach Fig. 6 links weist die bei den bisher beschriebenen Beispielen bereits genannte Lecktasse 16 auf und der Kolben 8 legt sich von oben gegen die Lauffläche 6 des Gleitringes 7 wie bei dem Beispiel nach Fig. 1, während bei der Ausführung nach Fig. 6 rechts die Lecktasse 16 fehlt und der Kolben 8 wie dem Beispiel nach Fig. 5 von unten an der Lauffläche 6 des Ringes 7 anliegt. Während bei der Ausführung nach Fig. 6 links kein Belastungsausgleich angedeutet ist, ist rechts für eine Entlastung durch die Rohrverbindung 21 gesorgt, wie bei der Ausführung nach Fig. 5 links und rechts. Der Laufdruck kann durch die Federung der Wellringe 19 und 20 erzeugt werden, die, da sie an beiden Enden dicht befestigt sind. sowohl als Druckfeder als auch als Zugfeder benutzt werden können.

Bei der Ausführung nach Fig. 6 wirkt der Behälterdruck wieder in Richtung des in Fig. 6 nur rechts gezeichneten Pfeiles 13.

Statt aus metallischen Werkstoffen, wie beschrieben, können die Wellringe 19 und 20 auch aus anderen, mindestens im gewellten Zustand elastisch ausreichend verformbaren Werkstoffen hergestellt sein, so aus synthetischen Elastomeren oder aus sonstigen Kunststoffen, wie PTFE, PVC usw.

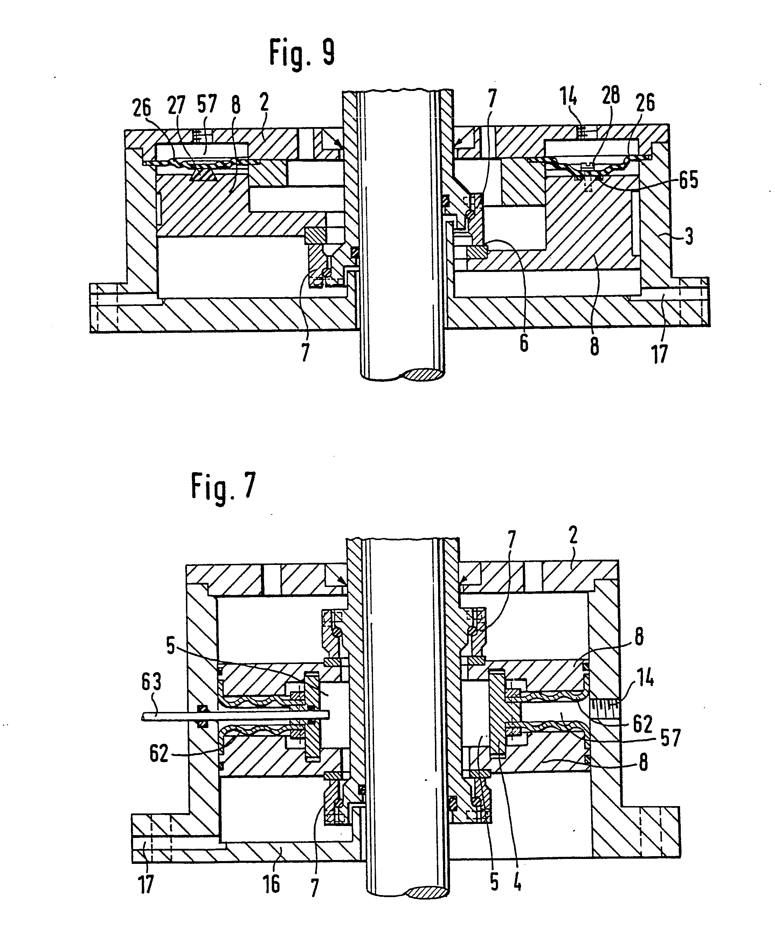

Bei dem in Fig. 7 gezeigten Beispiel der Verwendung erfindungsgemäß ausgebildeter Gleitringdichtungen sind zwei solche Dichtungen zu einer doppeltwirkenden Anordnung innerhalb desselben Dichtungsgehäuses verbunden. Hierbei sind Wellringe ähnlich den Wellringen 19, 20 des Beispiels nach Fig. 6 zur Begrenzung einer hier horizontal liegenden Druckkammer 57 verwendet. Während aber die Ringe 19, 20 durch ihre Wellung in der Höhe streckbar gemacht waren, sind hier die Ringe 62 durch ihre Wellung in ihrer Hauptebene verformbar.

Die aus dem axial verschiebbaren Kolben 8 und dem Gleitring 7 bestehende Anordnung ist hier doppelt vorgesehen; der in Fig. 8 unteren Anordnung liegt die obere symmetrisch, also spiegelgleich, gegenüber. Der die Schonhülse 10 umgebenden für beide Ringanordnungen gemeinsamen Schmierkammer 5 wird das Schmiermittel hier durch eine besondere, die Druckkammer 57 durchquerende Leitung 63 zugeführt. Die Abstandshülse 4, die die Druckkammer 57 von der Schmierkammer 5 trennt, greift hier an beiden Stirnenden in die sich gegenüberliegenden Kolben 8 mit einem deren Axialverschiebung zulassenden Spiel ein. In Fig. 7 links ist eine Ausführung mit Lecktasse 16 und Leckageleitung 17 dargestellt, die bei der Ausführung in Fig. 7 rechts fehlen.

Die Druckkammer 57 kann über Anschluß 14 auch an Unterdruck (Vakuum) gelegt werden; auch die doppeltwirkende Dichtungsanordnung läßt sich dann druckentlastet ausführen.

Bei dem in Fig. 8 gezeigten Ausführungsbeispiel der erfindungsgemäß ausgebildeten Gleitringdichtung enthält die Druckkammer 57 keinen Blähkörper und keine streckbaren Wellringe. Hier ist der Kolben 8 mit einem an seinem Umfang gebildeten verstärkten Ringbereich zwischen der Gehäusewandung und der Innenwandung eines am Gehäusedeckel 2 angeordneten, vorzugsweise mit ihm aus einem Stück bestehenden Ringansatzes 64 geführt und gegen die Gehäusewandung durch zwei Kolbenringe 24 und gegen die Wandung des Ringansatzes 64 durch einen Kolbenring 25 abgedichtet. Der Ringansatz trennt hier die Druckkammer 57 von der Schmierkammer 5, die gegeneinander durch den Kolbenring 25 abgedichtet sind. In Fig. 8 links ist die belastete Dichtungsausführung dargestellt, bei der über die Druckleitung 14 in die Druckkammer 57 über dem Kolben 8 ein Druck eingeführt wird, der auf der Kolbenfläche eine etwas größere Kraft ergibt, wie der Behälterdruck im Raum 15 unter dem Kolben 8.

Bei der Ausführung nach Fig. 8 rechts ist über die Leckageleitung 17 und die Rohrverbindung 21 wieder für Entlastung gesorgt. Hier ist in die Druckkammer 57 eine Zugfeder 22 eingebaut, die den Kolben 8 gegen die Lauffläche 6 des mitumlaufenden Gleitringes 7 zieht, der auf der Schonhülse 10 dicht befestigt ist.

Der Gehäusedeckel 2 ist durch einen O-Ring 23 gegen das Gehäuse 2 abgedichtet.

Während bei der Ausführung nach Fig. 8 rechts zwar die Entlastungs-Verbindung 17, 21, 14, nicht aber eine Lecktasse vorgesehen ist, ist bei der Ausführung nach Fig. 8 links eine Lecktasse 16 angeordnet. Während bei der Ausführung in Fig. 8 rechts der Kolben 8 von unten her an der Lauffläche 6 des Gleitringes 7 anliegt, liegt er bei der Ausführung nach Fig. 8 links von oben her auf der Lauffläche auf.

Bei dem Beispiel nach Fig. 9 ist die Druckkammer 57 durch einen Membranring 26 begrenzt, der zwischen dem Gehäusedeckel 2 und dem Gehäuse 3 dicht eingespannt ist. Bei der in Fig. 9 linken Ausführung wirkt die Membran 26 über einen Dichtring 27 mit dem Kolben zusammen. Bei der Ausführung nach Fig. 9 rechts ist sie unter Zwischenlage von Dichtungsringen 65 mittels Schrauben 28 auf dem Kolben befestigt. Fig. 9 links zeigt wieder die belastete Ausführung, wobei hier der Kolben 8 von oben auf der Lauffläche 6 des Gleitringes 7 aufliegt, während in Fig. 9 rechts die Entlastung über eine nicht gezeichnete Rohrverbindung von der Leckageleitung 17 zur Druckmittelzuleitung 14 der Druckkammer 57 angenommen ist. Bei dieser Ausführung in Fig. 9 rechts ist die Membrane 26 als Zugfeder benutzt, die bei sonstigem Belastungsausgleich die Auflagekraft an der Lauffläche 6 liefert.

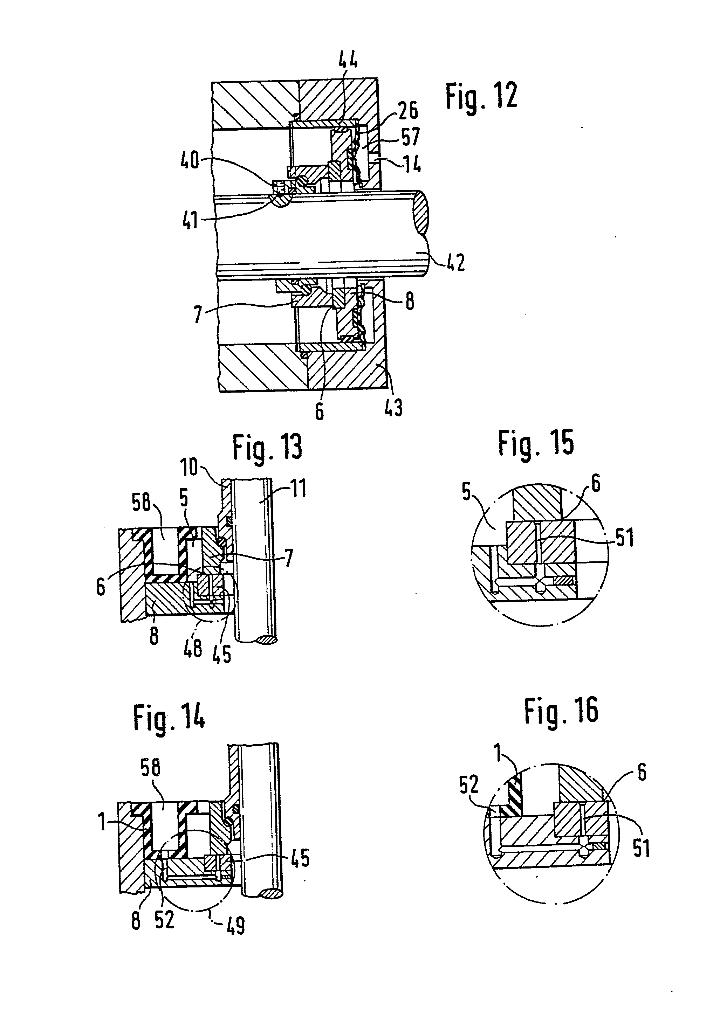

Um die Lauffläche 6 zuverlässig zu schmieren, wird zweckmäßig eine Zwangsschmierung vorgesehen. In dem axial verschiebbaren Kolben 8 werden dann Kanäle 51 angeordnet, die das Schmiermittel von der Schmierkammer 5 her der Lauffläche 6 zuleiten und dabei auch die in dem Kolben 8 gegebenenfalls eingesetzte Gleitwerkstoffeinlage 45 durchqueren. Eine Zwangsförderung des Schmiermittels wird bis zu einem gewissen Grade bereits durch die Relativbewegung des Gleitringes 7 gegenüber dem Einsatz 45 des Kolbens 8 herbeigeführt, vergl. Fig. 13 und 15. Statt der Schmierkammer 5 ein Schmiermittel drucklos zuzuführen, kann es auch unter Druck eingeleitet werden. Im letzteren Falle kann auch der sonst als Dehnkammer benutzte Innenraum 58 eines Blähkörperringes 1 aus geeignetem Werkstoff zur Aufnahme und Durchleitung eines unter Druck stehenden Schmiermittels benutzt werden, das dann zugleich an die Stelle eines sonst verwendeten pneumatischen oder hydraulischen Druckmediums tritt. In diesem Falle vergl. Fig. 14 und 16, wird dann das Schmiermedium durch eine an dem Innenraum 58 anschließende Düsenbohrung 52 eine Einspritzdüse 51, die den Einsatz 45 des Kolbens 8 durchsetzt, zugeleitet. Die Füllung des Raumes 58 wird dabei über Vorrats- und Druckhaltesysteme aufrechterhalten.

Das Rührwerk nach Fig. 11, bei dem zwei erfindungsgemäß ausgebildete Gleitringdichtungen ineinandergeschachtelt verwendet sind, weist eine innere Rührwelle 11 und eine diese umgebende, hierzu konzentrische, als Hohlwelle ausgebildete äußere Rührwelle 32 auf. Die Wellen 11 und 33 werden in entgegengesetzten Drehrichtungen angetrieben, nach der Darstellung in Fig. 11 die innere Welle 11 entgegen dem Uhrzeigersinn und die äußere Welle 33 im Uhrzeigersinn. Beide Wellen haben die gleiche geometrische Achse 34. Die innere Rührwelle 33 trägt eine erste gemäß der Erfindung ausgebildete Dichtungseinheit, deren Gehäuse mit allem Inhalt zusammen mit der Welle 11 umläuft. Der Deckel des Gehäuses ist hier mit 37, das Gehäuse selbst mit 37' bezeichnet. In dem Gehäuse ist ein Blähkörperring 1 von U-förmigem Querschnitt wie bei der Ausführung nach Fig. 1 angeordnet. Axial verschiebbar in dem Gehäuse 37' geführt ist der Kolben 8'.

Die innere Rührwelle 11 weist eine Axialbohrung 35 auf, die der Druckmittelzuführung zum Innenraum 58 des inneren Blähkörperringes dient. Von der Axialbohrung 35 zweigt eine Querbohrung 66 ab, die sich in einem im Deckel 37 angebrachten Kanal 67 fortsetzt, in den die Druckmittelzuleitung 14 mündet. Der Kolben 8' wirkt von oben her auf einen inneren Gleitring 38 ein, der hier auf einer Schonhülse 10' der in zur Drehrichtung der Welle 11 entgegengesetzter Drehrichtung umlaufenden, die äußere Rührwelle darstellende Hohlwelle 33 angebracht ist. Auf einer äußeren Schonhülse 10'' trägt diese Hohlwelle einen äußeren Gleitring 38', auf den von oben her der Kolben 8'' einer äußeren gemäß der Erfindung ausgebildeten Gleitringdichtung einwirkt. Diese äußere Gleitringdichtung ist ebenso ausgebildet, wie es anhand der Fig. 1 erläutert wurde. Dem Innenraum 58 wird Druckmittel über eine Druckmittelzuleitung 14 zugeführt, an die hier ein Kanal 67 in einem den Deckel der äußeren Dichtung darstellenden Gehäuseringteil 68 anschließt. Der Schmierkammer 5 wird das Schmiermittel über den Kanal 61 zugeführt, an den im Gehäuseringteil 68 ein Zuführungskanal 69 anschließt.

Bei der Verwendung einer erfindungsgemäß ausgebildeten Gleitringdichtung an einer horizontalen Pumpenwelle gemäß Fig. 12 trägt die Pumpenwelle 42 einen Ring 40, der in axialer Richtung justierbar und mittels einer Madenschraube 41 feststellbar ist und mit der Pumpenwelle umläuft. Der Ring 40 seinerseits trägt den mit der Welle umlaufenden Gleitring 7 einer erfindungsgemäß ausgebildeten Gleitringdichtung. Mit ihm wirkt der axial verschiebliche Grundringkolben 8 zusammen, der hier wie bei dem Beispiel nach Fig. 9 links unter der Wirkung eines elastisch federnd an ihm anliegenden Membranringes 26 steht, der ringsum dicht eingespannt ist und die hinter ihm befindliche Druckkammer 57 wie beschrieben veränderlich begrenzt. Der Pumpengehäusedeckel 43 dient hier zugleich als Dichtungsgehäusedeckel, in welchem die Membran 26 mittels einer in ihn eingesetzten Hülse 44 festgespannt ist.

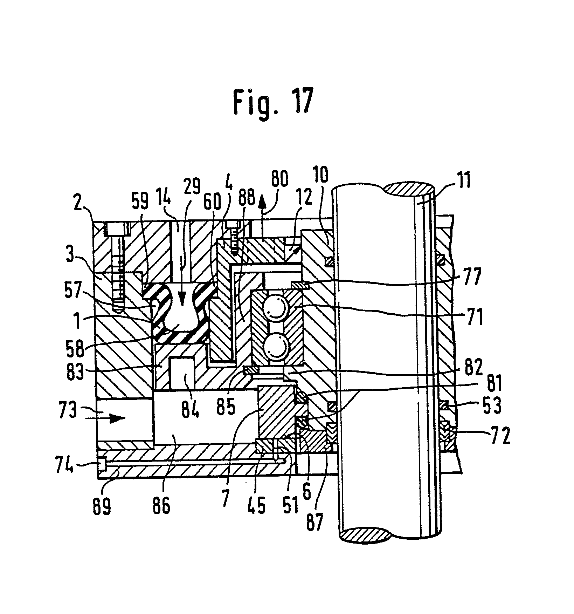

Bei dem gezeichneten Beispiel nach Fig. 17 weist das im wesentlichen zylindrische Dichtungsgehäuse 3 einen dicht aufgeschraubten Deckel 2 und eine Bodenplatte 89 auf. Mit dem Deckel ist eine Hülse 4 verschraubt, die mit dem Mantel des Gehäuses 3 eine ringförmige Druckkammer 57 bildet. Durch das Dichtungsgehäuse ist eine Rührwerkswelle 11 in unten näher erläuterter Weise hindurchgeführt, die bei dem gezeichneten Beispiel in senkrechter Richtung verläuft; im Gegensatz zu der gezeichneten Stellung könnte die Welle mit dem Dichtungsgehäuse je nach dem Anwendungsfall auch geneigt oder waagerecht liegen. In eine innere ringförmige Aussparung der Bodenplatte 89 des Dichtungsgehäuses ist der ortsfeste Grundring 45 eingesetzt.

Auf der Welle 11 ist eine Wellenschonhülse 10 drehfest, aber axial verschieblich angebracht. Sie ist gegenüber der Welle durch O-Ringe 53 gedichtet. Mittels eines an ihrem unteren Ende befestigten Endstückes 87 ist der mitumlaufende Gleitring 7 auf ihr gehalten. Der Gleitring ist gegenüber der Hülse durch O-Ringe 81 zusätzlich abgedichtet. Gegenüber der Welle 11 sind in der unteren Stirnfläche der Schonhülse 10 und in der oberen Fläche des Endstückes 87 zueinander passende Ringnuten ausgespart, in welche ein Manschettenring 72 eingesetzt ist, der der Abdichtung gegen einen im Rührbehälter etwa angewendeten Druck dient. Mit der Grundplatte 89 ist das Dichtungsgehäuse auf den Rührbehälter, z. B. einen Hochdruckkessel, ggfs. unter Zwischenschaltung weiterer Teile dicht aufgesetzt.

In die ringförmige Druckkammer 57 ist ein ebenfalls ringförmiger Blähkörper 1 eingesetzt, welcher Klemmleisten 59 und 60 aufweist, mit denen er zwischen dem Deckel 2 und sowohl im Gehäuse 3 als auch in der Hülse 4 vorgesehene Schulter-Ringnuten eingeklemmt ist. Durch den Deckel 2 führt eine Druckmittelzuleitung 14 hindurch, durch welche in Richtung des Pfeiles 29 gasförmiges oder flüssiges Druckmittel in den Innenraum 58 des Blähkörpers 1 eingeleitet werden kann. In den zwischen der inneren Mantelfläche des Gehäuses 3 und der äußeren Mantelfläche der Hülse 5 gebildeten Ringraum greift von unten her ein zwischen den Wandungen dieses Ringraumes geführter Ringkolben 83 ein, aus welchem zwecks Material- und Gewichtsersparnis ein Hohlraum 84 ausgespart ist. Der Blähkörper 1 liegt an der Stirnfläche des Ringkolbens 83 an. Nach dem mittleren Bereich hin bildet der Ringkolben 83 einen in die Hülse 4 eingreifenden, ebenfalls hülsenförmigen Ansatz 88.

In den zwischen dem Innenmantel des Ringkolbenansatzes 88 und dem Außenmantel der Schonhülse 10 oberhalb eines Bundes 82 der letzteren gebildeten Ringraum ist ein Wälzlager 71 eingesetzt. Dieses Wälzlager ist zweckmäßig ein kombiniertes Axial-Radial-Lager, z. B. ein Pendelrollenlager oder ein Kegelrollenlager; es kann jedoch auch als Rillenkugellager radial und axial belastbar sein. Der Ansatz 88 ist durch einen Seeger-Ring 85 mit dem Außenring des Wälzlagers 71 fest verbunden und in axialer Richtung gesichert. Der Innenring des Wälzlagers 71 ist auf der Schonhülse 10 auf deren Bund 82 mittels eines Seeger-Ringes 77 befestigt. Der Ringkolben 83, das Lager 71, die Schonhülse 10 mit dem Endstück 87 und der mitumlaufende Gleitring 7 bilden also eine auf der Welle 11 in Achsrichtung verschiebbare Einheit. Im Betriebszustand liegt der umlaufende Gleitring 7 mit seiner Lauffläche 6 auf der Oberfläche des Grundringes 45 auf. Der dichtende Laufdruck wird über die beschriebene axial verschiebliche Einheit vom Blähkörper 1 her übertragen. Solange noch ein Verschiebungsspiel vorhanden ist, bewegt sich diese Einheit bezogen auf die Abb. vertikal nach unten, wenn über die Druckmittelzuleitung 14 im Innenraum 58 des Blähkörpers 1 Überdruck erzeugt wird. Der Blähkörper dehnt sich dann und drückt den Kolben 83 mit den mit ihm verbundenen Teilen nach unten, bis der Gleitring 7 mit seiner Lauffläche 6 unter dem gewünschten dichtenden Laufdruck auf der Oberfläche des Grundringes 45 aufliegt. Beim Nachlassen des Druckes ist eine entlastende Rückbewegung möglich, die auch dadurch eingeleitet werden kann, daß der Innenraum 58 des Blähkörpers 1 unter Unterdruck gesetzt wird.

Statt des im Beispiel gezeichneten Blähkörpers 1 aus elastischem Werkstoff können Blähkörper abgewandelter Formgebung oder durch Zusammensetzung von Teilen, z. B. Wellringen, gebildete Blähkörper verwendet werden entsprechend den für solche Blähkörper der ersten Ausführungsgruppe oben beschriebenen Beispielen; wie oben ebenfalls dargestellt, kann der Ringkolben auch seinerseits abgedichtet geführt sein, so daß dann die Druckkammer 57 ohne Zwischenschaltung eines Blähkörpers unmittelbar beaufschlagt werden kann. Das Material der Manschettenringe 72 wird je nach den Erfordernissen aus gegen den Angriff von Chemikalien widerstandsfähigem Material und je nach den aus dem Druckraum eines Rührwerksbehälters zu erwartenden Beanspruchungen ausgewählt.

Das Lager 71 ist innerhalb eines über den umlaufenden Gleitring 7 geleiteten drucklosen Schmiermittelkreislaufes angeordnet. Das durch diesen Kreislauf geleitete Schmiermittel dient zugleich als Kühlmittel. Es wird in einen den Gleitring 7 umgebenden, über der Bodenplatte 89 befindlichen Füllraum 86 drucklos durch eine Bohrung 73 eingeleitet und oberhalb des Lagers 71 in Richtung des Pfeiles 80 abgeleitet. Von der Ableitung her gelangt das Kühl- bzw. Schmiermedium in einen Kühlbehälter, aus welchem es der Bohrung 73 wieder zufließt. Die Anordnung wird zweckmäßig so getroffen, daß die Bewegung des Mediums unter der Wirkung der mit der Temperaturänderung auftretenden Schwerkraftunterschiede selbsttätig erfolgt, wie bei Schwerkraft-Wasserheizungen. Der Füllraum 86 ist gegen die Atmosphäre mit einem Simmerring 12 abgedichtet. Die Lauffläche 6 wird über eine Schmierbohrung 51 geschmiert, der über eine in der Bodenplatte angeordnete Druckschmierleitung 74 ein unter Druck stehendes Schmiermittel z. B. von einem hydraulischen Druckaggregat her zugeführt wird. Die Druckschmierung der Lauffläche verhindert eine unzulässige Erwärmung und sorgt für längere Lebensdauer der aufeinander gleitenden Ringe.

1

<u>Patentansprüche</u>

1. Axiale Gleitringdichtung, insbesondere für gegen hohe Betriebsdrücke zu dichtende Wellen, mit Ringpaaren, deren jeweils einer Ring mit der Welle mitläuft und mit seiner einen Stirnfläche an der Stirnfläche eines jeweils anderen, nicht umlaufenden Ringes gleitet, dadurch gekennzeichnet, daß einer der beiden Finge eines Ringpaares unter von einem gasförmigen oder flüssigen Medium abgeleiteter Kraft axial verschiebbar ausgebildet ist.

2. Gleitringdichtung nach Anspruch 1, dadurch gekennzeichnet, daß der nicht umlaufende Ring eines Ringpaares als unter der Wirkung eines gasförmigen oder flüssigen Druckmittels in einem Dichtungsgehäuse (3, 2) axial verschiebbarer Kolben (8) ausgebildet ist.

3. Gleitringdichtung nach Anspruch 1 und 2, dadurch gekennzeichnet, daß auf der dem Betriebsdruck abgewendeten Seite des axial verschiebbaren Kolbens (8) eine Druckkammer (57) gebildet ist.

4. Gleitringdichtung nach Anspruch 1 bis 3, dadurch gekennzeichnet, daß der Kolben (8) im Dichtungsgehäuse (3) mittels in seinen Mantel eingesetzter Kolbenringe (24, 25) abgedichtet axial beweglich geführt ist, (Fig. 8).

5. Gleitringdichtung nach Anspruch 1 bis 3, dadurch gekennzeichnet, daß der im Dichtungsgehäuse (3) geführte Kolben (8) unter der Wirkung eines zur Aufnahme des Druckes flüssiger oder gasförmiger Medien geeigneten elastisch dehnbaren Blähkörpers (1) steht, dessen Innenraum (58) den Druckraum der Druckkammer (5) bildet.

6. Gleitringdichtung nach Anspruch 5, dadurch gekennzeichnet, daß der Blähkörper (1) durch Vorspannung mittels eines in den Kolben (8) eingreifenden Verankerungswulstes (18) für die Ausübung federnder Zugkräfte eingerichtet ist.

7. Gleitringdichtung nach Anspruch 1 bis 3 oder einem der folgenden, dadurch gekennzeichnet, daß auf der dem Betriebsdruck abgewendeten Seite des axial verschieblichen Kolbens neben der Druckkammer (57) eine von ihr durch eine Abstandshülse (4) getrennte Schmierkammer (5) gebildet ist.

8. Gleitringdichtung nach Anspruch 7, dadurch gekennzeichnet, daß die Abstandshülse (4) im Gehäusedeckel (2) dicht befestigt, z. B. eingeschrumpft oder angeschweißt ist, während sie an ihrem anderen Ende in eine in der dem Betriebsdruck abgewendeten Fläche des Kolbens (8) angebrachte Nut (56) mit einem in dieser verschieblich geführten Halsansatz unter Freilassung eines eine Axialbewegung zulassenden Axialspieles hineinragt.

9. Gleitringdichtung nach Anspruch 5, dadurch gekennzeichnet, daß der Blähkörper (1) ein elastisch dehnbarer Ring von ihm wesentlichen U-förmigem Querschnitt ist, dessen Innenraum (58) den Druckraum der Druckkammer (57) bildet und dessen Schenkel Klemmleisten (59, 60) aufweisen.

10. Gleitringdichtung nach Anspruch 5, dadurch gekennzeichnet, daß die Druckkammer (57) durch zwei getrennte, in ihrer Höhe streckbare, konzentrische Ringe (19, 20) verschiedenen Durchmessers begrenzt ist, die zwischen sich die Druckkammer (57) einschließen und die längs ihrer oberen Kanten am Gehäusedeckel (3) und längs ihrer Unterkanten an der dem Betriebsdruck abgewendeten Fläche des Kolbens (8) dicht angeklemmt sind, wobei sich der äußere Ring (19) an der inneren Mantelfläche des Gehäuses (3) und der innere Ring (20) an einer zentrisch angeordneten Abstandshülse (4) abstützt.

11. Gleitringdichtung nach Anspruch 1 bis 3 oder einem der folgenden, dadurch gekennzeichnet, daß die Druckkammer (27) durch eine von einer Leckage-Leitung (17) ausgehende Rohrverbindung (21) mit dem in Richtung der Wirkung des Betriebsdruckes gesehen innerhalb des Dichtungsgehäuses (3) vor der Dichtung liegenden Raum (15) verbunden ist.

12. Gleitringdichtung nach Anspruch 1 bis 4, dadurch gekennzeichnet, daß die Druckkammer (57) über dem Kolben (8) zwischen dem Innenmantel des Gehäuses (3) und einem mit dem Gehäusedeckel (2) aus einem Stück bestehenden, zentralen Ringansatz (64) gebildet ist und der Kolben (8) mit einem an seinem Umfang gebildeten verstärkten Ringbereich an der Wand des Gehäuses (3) und an der Außenfläche des Ringansatzes (67) geführt und gegen die Führungswände durch Kolbenringe (24, 25) abgedichtet ist.

13. Gleitringdichtung nach Anspruch 1 und 2 oder einem der folgenden, dadurch gekennzeichnet, daß bei entlasteter Lauffläche (6) der Gleitdruck durch eine in der Druckkammer (57) angeordnete Zugfeder (22) bestimmt ist, (Fig. 8r).

14. Gleitringdichtung nach Anspruch 1 bis 3, dadurch gekennzeichnet, daß der im Dichtungsgehäuse (3) geführte Kolben (8) unter der Wirkung einer zwischen Gehäuse (3) und Gehäusedeckel (2) dicht eingeklemmten, ringförmigen Membran (26) steht, deren Rückseite die Druckkammer (57) begrenzt.

15. Gleitringdichtung nach Anspruch 14, dadurch gekennzeichnet, daß die Membran (26) über einen in die ihr benachbarte Fläche des Kolbens (8) eingesetzten Dichtungsring (27) mit dem Kolben (8) in Wirkungsverbindung steht, (Fig. 9 1).

16. Gleitringdichtung nach Anspruch 14, dadurch gekennzeichnet, daß die Membran (26) auf der ihr benachbarten Fläche des Kolbens (8) vorzugsweise unter Zwischenlage von Dichtungsringen (65) dicht befestigt ist, vorzugsweise mittels Schrauben (28), und zugleich als bei entlastetem Kolben (8) den Gleitdruck liefernde Zugfeder benutzt ist.

17. Gleitringdichtung nach Anspruch 1 und 2 oder einem der folgenden, dadurch gekennzeichnet, daß die Gleitringdichtung dadurch doppelt wirkend ausgebildet ist, daß in demselben Gehäuse zwei Paarungen eines umlaufenden Gleitringes (7) und eines als axial verschiebbarer Kolben (8) ausgebildeten Grundringes spiegelbildlich einander gegenüberliegend angeordnet sind, (Fig. 7).

18. Gleitringdichtung nach Anspruch 17, dadurch gekennzeichnet, daß die nachgiebig begrenzte Druckkammer (57) zwecks Erzeugung einer Entlastung der Gleitfläche (6) für Unterdruckanschluß eingerichtet ist.

19. Gleitringdichtung nach Anspruch 1 und 2 oder einem der folgenden, dadurch gekennzeichnet, daß in dem axial verschiebbaren Kolben (8) Kanäle (51) für eine Zwangsschmierung der Lauffläche (6) von der Schmierkammer (5) her angebracht sind, die auch eine in den Kolben (8) gegebenenfalls eingesetzte Gleitwerkstoff-Einlage (45') durchqueren.

20. Gleitringdichtung nach Anspruch 1 und 2 oder einem der folgenden, dadurch gekennzeichnet, daß die Druckkammer (57), vorzugsweise der Hohlraum (58) eines in die Druckkammer eingesetzten Blähkörpers (1), als Pufferraum für den Durchgang des Schmiermittels einer Zwangsschmierung benutzt und durch Kanäle (52) mit einer in der Lauffläche (6) mündenden Einspritzdüse (51) verbunden ist, wobei die Druckkammer (57) bzw. der Hohlraum (58) des Blähkörpers (1) an vorrats- und druckerhaltende Systeme für das Schmiermittel angeschlossen ist.

21. Rührwerk mit zwei um dieselbe geometrische Achse gegenläufig antreibbaren Rührorganen, die auf einer inneren Rührwelle und einer diese als Hohlwelle umgebenden äußeren Rührwelle angeordnet sind, deren Gleitringdichtungen ineinander geschachtelt sind, dadurch gekennzeichnet, daß jede der ineinander geschachtelten Gleitringdichtungen gemäß Anspruch 1 oder einem der folgenden ausgebildet ist, (Fig. 11).

22. Pumpe, insbesondere Hochdruckpumpe, bei der die Durchführung der Antriebswelle durch das Pumpengehäuse durch eine Gleitringdichtung abgedichtet ist, dadurch gekennzeichnet, daß der den Wellendurchgang umgebende Pumpengehäusedeckel (43) als Gehäusedeckel einer gemäß Anspruch 1 und 2 oder einem der folgenden, insbesondere 14 und 15, ausgebildeten Gleitringdichtung benutzt ist, (Fig. 12).

23. Gleitringdichtung nach Anspruch 1, dadurch gekennzeichnet, daß der umlaufende Gleitring (7) eines Ringpaares (7, 45) mittels eines unter der Wirkung eines gasförmigen oder flüssigen Druckmittels axial verschieblichen, nicht mitumlaufenden Kolbens (83) axial verschiebbar ausgebildet ist.

24. Gleitringdichtung nach Anspruch 23, dadurch gekennzeichnet, daß der Kolben als koaxial mit dem umlaufenden Gleitring (7) angeordneter Ringkolben (8) ausgebildet ist.

25. Gleitringdichtung nach Anspruch 23 und 24, dadurch gekennzeichnet, daß zwischen den Ringkolben (83) und den umlaufenden Gleitring (7) ein Lager (71) für die Welle (11) vorzugsweise ein radial und axial belastbares Wälzlager eingebaut ist.

26. Gleitringdichtung nach Anspruch 23 bis 25, dadurch gekennzeichnet, daß das Lager (71) dem umlaufenden Gleitring (7) unmittelbar benachbart angeordnet ist.

27. Gleitringdichtung nach Anspruch 23 bis 26, dadurch gekennzeichnet, daß das Lager (71) innerhalb eines über den umlaufenden Gleitring (7) geleiteten drucklosen Schmiermittelkreislaufes (73, 86, 80) angeordnet ist.

28. Gleitringdichtung nach Anspruch 23 bis 27, mit einem einen äußeren und einen inneren Lagerring aufweisenden Wälzlager, dadurch gekennzeichnet, daß der umlaufende Gleitring (7) und der innere Ring des Wälzlagers (71) auf einer auf der Rührwerkswelle (11) drehfest, aber axial verschieblich angebrachten Schonhülse (10) mitumlaufend angeordnet sind und daß der äußere Lagerring des Wälzlagers (71) in einem zylindrischen, hülsenförmigen Ansatz (88) des Ringkolbens (83) sitzt.

## Fig. 1

## Fig. 5

Fig. 2

Fig. 3

Fig. 4

Fig. 10

Fig. 6

Fig. 8

Fig. 9

Fig. 7

Fig. 11

Fig. 12

Fig. 13

Fig. 15

Fig. 14

Fig. 16

Fig. 17

Europäisches
Patentamt

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | GB-A- 817 396 (NAPIER)<br><br>*Seite 3, Zeilen 34-98; Seite 4, Zeilen 91-116; Figuren 1,3* | 1-3,14 ,16,19 ,20,23 | F 16 J 15/34<br>F 16 J 15/36 |
| X | US-A-3 034 797 (PIKE)<br><br>*Spalte 1, Zeile 71 - Spalte 2, Zeile 68; Figur 2* | 1-4,7, 19 | |
| X | FR-A-1 086 619 (LICENTIA)<br><br>*Seite 2, rechte Spalte, Absätze 1-3; Figur 2* | 1,2,7, 14,16 | |
| X | DE-C- 688 138 (LUFTTECHNISCHE)<br>*Seite 2, Zeilen 9-87; Figur 2* | 1,2,10 | |
| X | DE-B-1 035 427 (LICENTIA)<br><br>*Spalte 2, Zeile 44 - Spalte 3, Zeile 37; Figuren* | 1,2,4, 7,12, 19 | RECHERCHIERTE SACHGEBIETE (Int. Cl. ³)<br><br>F 16 J |
| X | DE-A-2 918 450 (HOWALDSWERKE)<br><br>*Seite 8, Absatz 1 - Seite 10; Figuren 1-3*<br><br>---<br>-/- | 1,2,4, 17,19, 20 | |

Der vorliegende Recherchenbericht wurde für alle Patentansprüche erstellt.

| Recherchenort | Abschlußdatum der Recherche | Prüfer |
|---|---|---|
| DEN HAAG | 31-08-1982 | LEGER M.G.M. |

# EUROPÄISCHER RECHERCHENBERICHT

Europäisches
Patentamt

Nummer der Anmeldung

EP 82 10 3364

## EINSCHLÄGIGE DOKUMENTE

Seite 2

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | GB-A-2 054 067 (CRANE) <br><br> *Seite 1, Zeilen 53-129; Figuren 1,2* | 1,5,9, 10,11, 22 | |
| X | FR-A- 973 610 (S.A.ISNARD) <br><br> *Insgesamt* | 1,2,14 ,17,20 | |
| X | FR-A-1 099 695 (LICENTIA) <br><br> *Insgesamt* | 1,2,5, 7,9,12 | |
| X | FR-A-2 322 313 (ESCHER WYSS) <br><br> *Seite 5, Zeile 23 - Seite 12, Zeile 7; Figuren 1-10* | 1-5,12 ,19,20 | |
| A | US-A-2 525 366 (MEYER) <br> *Insgesamt* | 24-26 | RECHERCHIERTE SACHGEBIETE (Int. Cl. ³) |

Der vorliegende Recherchenbericht wurde für alle Patentansprüche erstellt.

| Recherchenort | Abschlußdatum der Recherche | Prüfer |
|---|---|---|
| DEN HAAG | 31-08-1982 | LEGER M.G.M. |